# EUROPÄISCHE PATENTSCHRIFT

(11) **EP 1 050 444 B1**
(45) Veröffentlichungstag und Bekanntmachung des Hinweises auf die Patenterteilung: **05.07.2006**
(21) Anmeldenummer: 00107462.4
(22) Anmeldetag: 06.04.2000
(51) Int. Cl.: B60T 8/00, B60T 13/66, B60Q 1/44

(54) **Vorrichtung zur Bremslichtansteuerung**
Device for brake light switching control
Dispositif pour contrôler les feux de freinage

(30) Priorität: 03.05.1999 DE 19920096
(43) Veröffentlichungstag der Anmeldung: 08.11.2000
(73) Patentinhaber: Bayerische Motoren Werke Aktiengesellschaft, 80809 München (DE)
(72) Erfinder: Poguntke, Oliver, 80993 München (DE); Prestl, Willibald, 82223 Eichenau (DE); Toelge, Thomas, 80993 München (DE)

(56) Entgegenhaltungen:
- DE-A- 19 504 411
- DE-A- 19 814 574
- DE-A- 19 859 602
- DE-C- 19 511 388
- DE-U- 29 709 110

## Beschreibung

Die Erfindung betrifft eine Vorrichtung zur Bremslichtansteuerung gemäß dem Oberbegriff des Anspruchs 1.

Üblicherweise sind bei Kraftfahrzeugen Bremslichtschalter im Bereich des Bremspedals eingesetzt, die bei Betätigung eines Bremspedals aktiviert werden. Der Bremslichtschalter betätigt dann direkt oder über eine dazwischengeschaltete Steuereinrichtung die Bremsleuchten, die einem nachfolgenden Verkehr eine Bremsung eines vorausfahrenden Fahrzeugs anzeigen.

Problematisch ist in diesem Zusammenhang der Einsatz von Bremsregelsystemen und insbesondere von Fahrzeuggeschwindigkeitsregelsystemen, die einen aktiven Bremseingriff ohne Betätigung eines Bremspedals durch einen Fahrzeugbediener herbeiführen. Ohne geeignete Maßnahmen kann während eines solchen Bremseingriffs das Bremslicht nicht angesteuert werden. Damit würde einem nachfolgenden Verkehr eine Bremsung nicht angezeigt werden.

Zur Vermeidung dieser Problematik ist ein System bekannt, das bei einem Bremsregeleingriff das Bremspedal selbst beaufschlagt. Bei diesem bekannten System wird im Fall einer Bremsung durch eine Abstandsregeleinrichtung ein Unterdruckbremskraftverstärker elektrisch angesteuert. Dieser zieht dann das Bremspedal nach vorne, wodurch der herkömmliche Bremslichtschalter in üblicher Weise betätigt wird.

Diese Vorgehensweise führt jedoch dazu, daß im Falle einer Bremsübernahme durch den Fahrer das Bremspedal nicht an seiner gewohnten Position steht. Dies kann gewöhnungsbedürftig sein und zu Irritationen führen.

Neben dem vorgenannten System, bei dem das Bremspedal nach vorne gezogen wird, ist auch ein Ansatz möglich, bei dem bei einem aktiven Bremseingriff, insbesondere bei einem Abstandsregeleingriff, ein aktives Bremsregelsystem mit Hydraulikaggregat betätigt wird, ohne daß sich das Bremspedal bewegt. Dabei wird jedoch der Bremslichtschalter nicht betätigt.

Aus der DE 31 30 873 A1 ist ein Steuersystem für den gegenseitigen Abstand von Fahrzeugen bekannt. Das Steuersystem umfaßt eine Signalverarbeitungsschaltung, die ein Bremslicht dann beaufschlagt, wenn ein Gaspedal zu seiner Leerlaufstellung hin beaufschlagt wird. In diesem Fall kann ein nachfolgender Fahrer darüber informiert werden, daß die Bremsen möglicherweise bald betätigt werden.

Die DE-U-297 09 110 beschreibt eine Warneinrichtung für Kraftfahrzeuge mit einem ABS-System. Diese Warneinrichtung umfasst einen Wamungsgeber der durch den Eingriff des ABS-Systems in den Bremseingriff aktivierbar ist, wodurch ein eingeleiteter Bremsvorgang, bei dem das ABS-System eingreift, ohne jegliches Handeln des Fahrers zuverlässig und unverzüglich weiteren Verkehrsteilnehmem mitgeteilt wird. Hierfür werden die Bremsleuchten über den Wamungsgeber derart angesteuert, dass sie blinken oder flackern.

Femer ist aus der gattungs bilden den DE 43 38 399 A1 ein Verfahren und eine Vorrichtung zur Steuerung eines Fahrzeugs bekannt, wobei im Sinne einer Fahrgeschwindigkeitsregelung oder einer Fahrgeschwindigkeitsbegrenzung durch eine erste Steuereinheit die Motorleistung und durch eine zweite Steuereinheit die Bremsleistung beeinflusst wird.

Aufgabe der vorliegenden Erfindung ist es, eine Vorrichtung anzugeben, die die genannten Nachteile vermeidet. Insbesondere soll ein Bremslicht so angesteuert werden, daß dies für den nachfolgenden Verkehr plausibel erscheint.

Diese Aufgabe ist durch die im Anspruch 1 genannten Merkmale gelöst.

Insbesondere ist ein Steuergerät, welches zur Ansteuerung von Fahrzeugbremsen dient, mit einer Steuereinrichtung verbunden, die wiederum zur Ansteuerung der Bremsleuchten dient. Die Steuereinrichtung wird von dem Steuergerät derart beaufschlagt, daß die Bremsleuchten auch ohne Betätigen des Bremslichtschalters bei ersten, vorgegebenen Fahrzeugbetriebsbedingungen aktivierbar und bei zweiten vorgegebenen Fahrzeugbetriebsbedingungen deaktivierbar sind. Bei dem Bremssystem handelt es sich um ein herkömmliches hydraulisches System mit einem Hydraulikaggregat, welches von dem Steuergerät zur Regelung der Bremsdrücke zu den einzelnen Fahrzeugbremsen beaufschlagt wird.

Diese Betriebsbedingungen sollten so gewählt werden, daß eine für den nachfolgenden Verkehr angezeigte Bremsung plausibel erscheint.

Gemäß der Erfindung muß die Fahrzeug-Istverzögerung einen bestimmten Schwellwert überschreiten, d. h. also, es muß eine Verzögerung in ausreichendem Maße vorliegen. Zudem sollte auch der in dem Hydraulikaggregat erzeugte Hydraulikdruck größer sein als ein bestimmter Schwellwert, z. B. 2 bar. Femer sollte u. a. ein aktiver Druckaufbau durch das Hydraulikaggregat vorliegen, was bedeutet, daß das Hydraulikaggregat für einen Regelbremseingriff aktiviert ist.

Die Deaktivierung der Bremslichter kann dann vorgenommen werden, wenn der Druckaufbau durch das Hydraulikaggregat beendet wird, die Fahrzeug-Istverzögerung eine bestimmte Schwelle unterschreitet, d. h. die Verzögerung unterhalb einer bestimmten Grenzverzögerung liegt oder der Hydraulik-Druck im Bremssystem einen bestimmten Wert unterschreitet. Dabei können die beiden Grenzverzögerungswerte für eine Aktivierung des Bremslichtes und für eine Deaktivierung des Bremslichtes durch einen Offset verschieden sein, so daß eine Ansteuerhysterese gebildet ist, die eine Flackerneigung des Bremslichtes vermeidet.

Gemäß der Erfindung ist eine Einrichtung zur Ermittlung einer Fahrzeug-Istverzögerung vorgesehen. Dem Steuergerät wird ein entsprechender Fahrzeug-Istverzögerungswert zur Verfügung gestellt, so daß eines der vorgenannten Kriterien überprüft werden kann. In einer einfachen Ausführungsform wird zur Ermittlung der Fahrzeug-Istverzögerung zumindest ein Raddrehzahlfühler vorgesehen.

Überdies wird gemäß der Erfindung eine Einrichtung zur Ermittlung des Hydraulikdruckes bei einem hydraulischen Bremssystem zwischen dem Hydraulikaggregat und den Radbremsen vorgesehen, so daß das Kriterium der Überschreitung eines Druckschwellwerts überprüft werden kann. Gemäß einer ersten Ausführungsform kann diese Einrichtung in Form einer Berechnungseinheit vorgesehen sein, die den Hydraulikdruck abschätzt und zwar beispielsweise aus den Ansteuerzeiten vom im Hydraulikaggregaten verbauten Ventilen und einer Rückförderpumpe. Die Abschätzung erfolgt gemäß einem vorgegebenen Modell.

Sind Drucksensoren zwischen dem Hydraulikaggregat und den Radbremsen angeordnet, so kann der Hydraulikdruck alternativ auch unmittelbar erfaßt werden.

Zur Berücksichtigung von Fahrbahnneigungen steigt der erste Fahrzeug-Verzögerungsgrenzwert, bei dem als ein Kriterium die Bremsleuchten aktiviert werden, erfindungsgemäß mit zunehmendem Hydraulikdruck an. Insbesondere ist dieser Anstieg linear. In einem Hydraulikdruck-Istverzögerungs-Diagramm schneidet der erste Fahrzeug-Verzögerungsgrenzwert die Ordinate, also die Achse für die Istverzögerung, beim Solldruck von 0 bar bei einem Wert, der sich aus einer geschwindigkeitsabhängigen Eigenverzögerung und einem festgelegten OffsetWert zusammensetzt. Die Abszisse wird bei einer Verzögerung von 0 m/sek.² an einer Stelle von dem Fahrzeug-Verzögerungsgrenzwert geschnitten, an dem eine Hangabtriebskraft ein bestimmtes Gefälle kompensiert. Als Gefälle sind beispielsweise eine Steigung von 10 % angenommen. Die Gründe hierfür werden später noch dargelegt.

Nachfolgend wird ein besonderes Ausführungsbeispiel der Erfindung mit Bezug auf die beiliegenden Zeichnungen näher erläutert. Die Zeichnungen zeigen in
- Fig. 1: eine blockdiagrammartige schematische Darstellung einer erfindungsgemäßen Vorrichtung zur Bremslichtansteuerung,
- Fig. 2: ein Solldruck-Istverzögerungs-Diagramm, aus dem ein Kriterium für die Aktivierung und Deaktivierung des Bremslichtes deutlich wird und
- Fig. 3: ein Fahrzeuggeschwindigkeits-Eigenverzögerungsdiagramm, aus dem die mit der Fahrzeuggeschwindigkeit zunehmende Eigenverzögerung erkennbar ist.

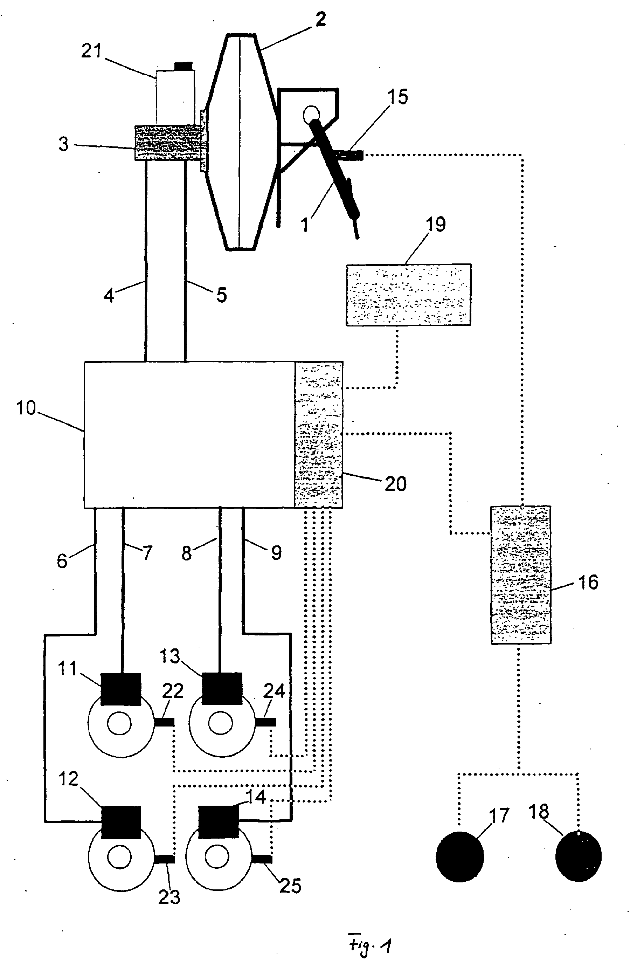

Das schematische Schaltbild in Fig. 1 zeigt ein Bremspedal 1, mittels welchem ein nicht dargestellter Fahrer eine mit einem Bremskraftverstärker 2 verstärkte Kraft auf einen Tandem-Hauptbremszylinder 3 ausübt. Durch die Betätigung des Bremspedals 1 wird in dem Tandem-Hauptbremszylinder 3 ein Hydraulikdruck erzeugt, der über Bremsleitungen 4 und 5 zu einem Hydraulikaggregat 10 weitergegeben wird. Vom Hydraulikaggregat 10 wird der Bremsdruck über Bremsleitungen 6, 7, 8 und 9 an Radbremsen 11, 12, 13 und 14 weitergegeben.

Bei dem Hydraulikaggregat 10 handelt es sich um ein an sich bekanntes Hyraulikaggregat für einen fremdkraftbetätigten Bremseingriff, wie sie bei Bremsregelsystemen oder bei Geschwindigkeitsregelsystemen allgemein verwendet werden. Da solche Hydraulikaggregate aus dem Stand der Technik hinreichend bekannt sind, werden sie vorliegend nicht näher erläutert.

Mit der Bremspedalbetätigung wird durch einen Bremslichtschalter 15 ein Signal erzeugt, das vorliegend über ein Steuergerät 16 die Bremsleuchten 17 und 18 elektrisch ansteuert. Bei einer Betätigung des Bremspedals 1 werden somit die Bremsleuchten 17 und 18 aktiviert und zeigen dem nachfolgenden Verkehr einen Bremsvorgang beim vorausfahrenden Fahrzeug an.

Das Hydraulikaggregat 10 umfaßt ein Steuergerät 20, welches den Betrieb des Hydraulikaggregats 10 bestimmt. Das Steuergerät 20 erhält vorliegend von Raddrehzahlsensoren 22, 23, 24 und 25 Drehzahlsignale und verarbeitet diese. Zusätzlich können - vorliegend nicht dargestellt - weitere Fahrbetriebsmeßgrößen dem Steuergerät 20 zugeführt und in diesem verarbeitet werden.

Bei einem aktiven Bremseingriff, der nicht durch einen Fahrer durch manuelles Bedienen des Bremspedals 1 herbeigeführt wird, gibt das Steuergerät 20 an das Hydraulikaggregat 10 einen entsprechenden Befehl ab. Das Hydraulikaggregat 10 saugt aus einem Ausgleichsbehälter 21 Bremsflüssigkeit durch den Tandem-Hauptbremszylinder 3 an und baut damit in den Radbremsen 11, 12, 13 und 14 den benötigten Bremsdruck auf. Bei der Verwendung eines automatischen Bremseingriffs in einer Abstandsregeleinrichtung wird die Istverzögerung bis zu einem Sollverzögerungswert aufgebaut. Die Fahrzeug-Istverzögerung kann aus den Signalen der Raddrehzahlfühler 22, 23, 24 und 25 abgeleitet werden.

Der sich einstellende Radbremsdruck wird vorliegend aus den Ansteuerzeiten der im Hydraulikaggregat verbauten und nicht dargestellten Ventile und einer ebenfalls nicht dargestellten Förderpumpe mittels eines Hydraulikmodells abgeschätzt. Die Abschätzung erfolgt im Steuergerät 20.

Alternativ können natürlich auch Drucksensoren zwischen dem Hydraulikaggregat 10 und den Radbremsen 11 - 14 verwendet werden, wobei der abgeschätzte Druck durch den tatsächlichen Druck ersetzt wird.

Das Steuergerät 20 ist in erfindungsgemäßer Weise mit der Steuereinrichtung 16 verbunden und beaufschlagt dieses zur Aktivierung oder Deaktivierung der Bremsleuchten 17 und 18, wenn dies aufgrund vorgegebener Kriterien notwendig ist. Somit wird die Ansteuerung der Bremsleuchten 17 und 18 über das Steuergerät 20 ausgelöst, wodurch dem nachfolgenden Verkehr ein Bremsregeleingriff angezeigt werden kann.

Die Ansteuerung der Bremsleuchten 17 und 18 soll natürlich so erfolgen, daß dies für den nachfolgenden Verkehr plausibel erscheint. Daher werden zweckmäßigerweise passende Kriterien aufgestellt, bei denen eine Aktivierung bzw. eine Deaktivierung der Bremsleuchten vorgenommen wird.

Vorliegend erfolgt eine Aktivierung der Bremsleuchten 17 und 18 über das Steuergerät 20 des Hydraulikaggregats 10 dann, wenn erstens ein aktiver Druckaufbau im Hydraulikaggregat vorgenommen wird. Die Aktivierung des Hydraulikaggregats 10 ist dem Steuergerät 20 bekannt, da sie von diesem selbst erzeugt wird. Zweitens soll die ermittelte Fahrzeug-Istverzögerung über einer bestimmten Verzögerungsschwelle liegen; d. h. es soll eine Verzögerung in bestimmter Höhe vorliegen. Drittens soll auch der Druck in den Radbremsen eine vorgegebene Druckschwelle von beispielsweise 2 bar überschreiten. Vorliegend würden die Bremsleuchten 17 und 18 über die Steuereinrichtung 16 von dem Steuergerät 20 nur dann aktiviert, wenn alle diese drei Vorgaben erfüllt sind. Natürlich können die Kriterien auch anders gewählt werden, falls dies zweckmäßig ist.

Eine Deaktivierung der Bremsleuchten 17 und 18 erfolgt dann, wenn entweder der aktive Druckaufbau im Hydraulikaggregat beendet wird, die Fahrzeug-Istverzögerung einen bestimmten zweiten Schwellwert unterschreitet oder der Hydraulikbremsdruck eine bestimmte zweite Druckschwelle unterschreitet. Dabei können die Verzögerungsschwellwerte und Druckschwellwerte beim Aktivieren und Deaktivieren der Bremsleuchten 17 und 18 unterschiedlich gewählt werden. Durch eine Wahl einer Ansteuerhysterese kann man nämlich eine Flackerneigung der Bremsleuchten 17 und 18 verhindern.

Anhand der Fig. 2 sollen nun die Kriterien für die Ein- und Ausschaltverzögerungsschwellen näher erläutert werden. Im Diagramm der Fig. 2 ist auf der Abszisse ein Solldruck und auf der Ordinate eine Istverzögerung angegeben. Der Solldruck gibt an, welcher Bremsdruck aufgebaut werden muß, um eine bestimmte Istverzögerung zu erreichen. Die mit der Bezugsziffer 100 gekennzeichnete Gerade stellt diejenige Kurve dar, welche sich ergibt, wenn ein Fahrzeug im wesentlichen auf ebenem Gelände bewegt wird. Zur Erreichung eines bestimmten Istverzögerungswertes muß ein bestimmter Solldruck aufgewendet werden.

Je nach dem, ob man nun bergauf oder bergab fährt, muß für die gleiche Verzögerung ein anderer Soll- oder Bremsdruck aufgebaut werden. Durch eine entsprechende Neigung einer Straße verschiebt sich die Kurve 100 entsprechend des strichlinierten Doppelpfeils in Richtung "bergauf" oder "bergab". Mit 112 ist eine Kurve dargestellt, die die Istverzögerung gegenüber dem Solldruck bei einem bestimmten Anstieg wiedergibt. Mit der Bezugsziffer 110 ist eine Kurve dargestellt, welche die Istverzögerung bei einem bestimmten Solldruck bei einem Gefälle von 10 % wiedergibt. Die mit der Bezugsziffer 110 gekennzeichnete Kurve schneidet die Abszisse bei einem Solldruck P₁₀. Dieser Solldruck gibt den Bremsdruck an, der bei einem sich auf einer abschüssigen Fahrbahn mit 10 % Gefälle bewegenden Fahrzeug aufgewendet werden muß, um eine gleichbleibende Fahrzeuggeschwindigkeit (Fahrzeugverzögerung = 0 m/sek²) zu erreichen.

Der Schnittpunkt der Kurve 100 mit der Ordinate gibt die Eigenverzögerung des Fahrzeugs wieder, wenn kein Bremsdruck aufgewendet wird. Diese Eigenverzögerung ergibt sich im wesentlichen aus der Gesamtheit der Reibungsverluste.

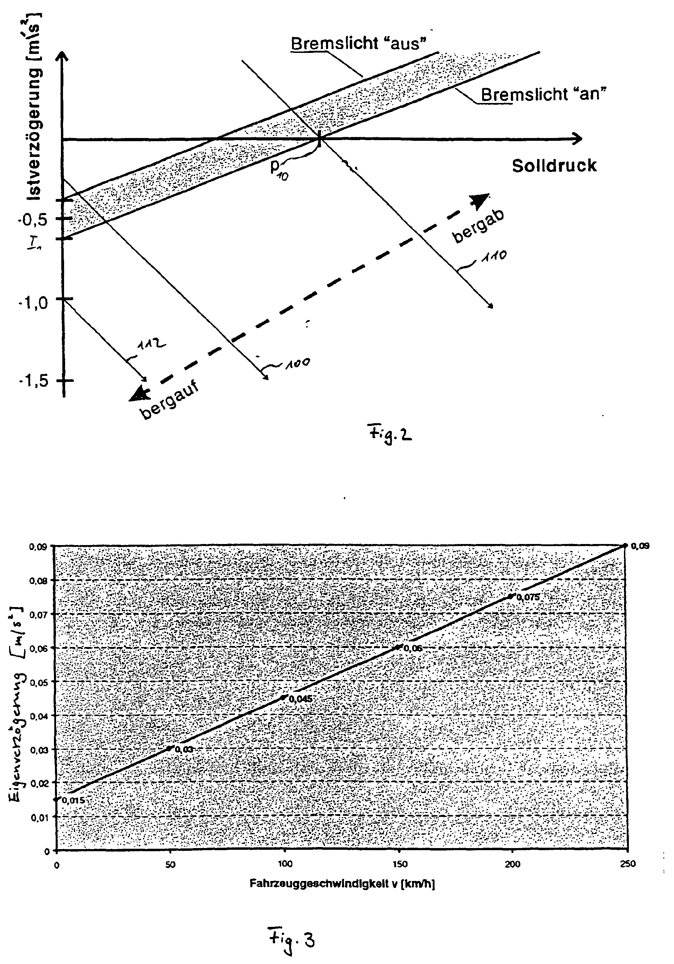

In Fig. 3 ist die geschwindigkeitsabhängige Eigenverzögerung dargestellt, die im höheren Geschwindigkeitsbereich zunehmen kann.

Der Fahrzeugverzögerungsschwellwert, bei dem die Bremsleuchten 17 und 18 angesteuert werden sollen, ergibt sich nun aus der geschwindigkeitsabhängigen Eigenverzögerung zuzüglich eines bestimmten, festgelegten Offsetwertes (I1). Der Fahrzeugverzögerungsgrenzwert steigt mit zunehmendem Solldruck an und schneidet die Null-Verzögerungslinie (Verzögerung = 0 m/sek.²) bei einem Solldruck, der einen Hangabtrieb bei einem Gefälle von 10 % kompensiert.

Der Solldruck P₁₀ ist so gewählt, daß diese Verzögerung auch durch Einlegen eines Ganges unter Ausnutzung der Motorbremswirkung erreicht werden könnte. Auch in diesem Fall wird ein Fahrzeug gebremst und es liegt keine Information über einen Bremsvorgang für den nachfolgenden Verkehr vor.

Der Verzögerungsschwellwert "Bremslicht aus", bei dem die Bremsleuchten 17 und 18 deaktiviert werden, liegt um einen bestimmten Betrag höher als der Schwellwert für die Aktivierung der Bremsleuchten. Der zwischen den beiden Verzögerungssschwellwerten "Bremslicht an" und "Bremslicht aus" liegende Bereich stellt eine Ansteuerhysterese dar, die zur Vermeidung einer Flackerneigung beiträgt.

Insgesamt ist das in Fig. 2 dargestellte Diagramm somit für eine bestimmte Fahrzeuggeschwindigkeit aussagekräftig. Liegt ein Betriebspunkt unterhalb der Kurve "Bremslicht an", so ist das Kriterium, das die Fahrzeugverzögerung einen bestimmten Schwellwert überschreitet, erfüllt. Liegt der Betriebspunkt über der Kurve "Bremslicht aus", so ist das Kriterium erfüllt, daß die Fahrzeugverzögerung einen bestimmten Schwellwert unterschreitet.

Im Hysteresebereich wird der jeweilige Zustand gehalten.

Durch die erfindungsgemäße Vorrichtung zur Bremslichtansteuerung kann dem nachfolgenden Verkehr ein plausibles Bremsverhalten auch bei Verwendung eines Bremsregelsystems angezeigt werden. Dabei können die Fälle "Verzögerung in der Ebene", "Bergabfahrt mit konstanter Geschwindigkeit" und "Verzögerung bei Bergabfahrt" unterschieden und in geeigneter Weise behandelt werden.

Die beschriebene Ansteuerung berücksichtigt somit die jeweilige Fahrsituation und betätigt die Bremsleuchten für den nachfolgenden Verkehr nachvollziehbar. Da der Verzögerungsschweliwert gemäß dem vorliegenden Ausführungsbeispiel mit zunehmender Geschwindigkeit und damit mit einer Zunahme der Eigenverzögerung sinkt, wird eine zu frühe Ansteuerung der Bremsleuchten 17 und 18 vermieden. Zudem erfolgt eine Ansteuerung der Bremsleuchten während einer konstanten Bergabfahrt ohne Verzögerung erst ab einem bestimmten Gefälle. Bei einem geringen Gefälle ohne Verzögerung erfolgt dagegen keine Ansteuerung. Dies entspricht einer Rückschaltung bei einem Handschaltgetriebe.

Im übrigen werden durch diese Umsetzung der Bremslichtansteuerung der Beladungszustand des Fahrzeugs und der Bremsbelagreibwert berücksichtigt. Durch weitere Maßnahmen kann auch der Fahrbahnreibwert berücksichtigt werden. Damit ist eine intelligente Ansteuerung des Bremslichts im Vergleich mit einem Bremslichtschalters am Bremspedal möglich.

## Patentansprüche

1. Vorrichtung zur Bremslichtansteuerung bei einem Fahrzeug mit einem für eine Fremdkraftbetätigung ausgebildeten Bremssystem mit einem Steuergerät (20) zur Ansteuerung der Fahrzeugbremsen und mit einem im Bereich eines Bremspedals (1) angeordneten Bremslichtschalter (15), der mit einer Steuereinrichtung (16) zur Ansteuerung von zumindest einer Bremsleuchte (17, 18) verbundenen ist, wobei das Steuergerät (20) mit der Steuereinrichtung (16) gekoppelt ist und diese derart beaufschlagt, daß die zumindest eine Bremsleuchte (17, 18) beim Betrieb des mittels Fremdkraft betätigten Bremssystems auch ohne Betätigen des Bremslichtschalters (15) bei ersten, vorgegebenen Fahrzeugbetriebsbedingungen aktivierbar und bei zweiten, vorgegebenen Fahrzeugbetriebsbedingungen deaktivierbar ist,
**dadurch gekennzeichnet, daß**
- eine Einrichtung zur Ermittlung einer Fahrzeug-Istverzögerung vorgesehen ist und ein dem Fahrzeug-Istverzögerungswert entsprechender Wert dem Steuergerät (20) bereitgestellt wird,
- das Bremssystem ein Hydraulikaggregat mit einer Einrichtung zur Ermittlung eines Hydraulikdruckes umfasst,
- als erste Fahrzeugbetriebsbedingungen das Überschreiten eines vorgegebenen ersten Fahrzeug-Verzögerungsgrenzwertes gewählt wird,
- und der Fahrzeug-Verzögerungsgrenzwert zur Berücksichtigung von Fahrbahnneigungen mit zunehmendem Hydraulikdruck ansteigt.

2. Vorrichtung nach Anspruch 1,
**dadurch gekennzeichnet,**
**daß** zumindest ein Raddrehzahlfühler (22, 23, 24, 25) zur Ermittlung der Fahrzeug-Istverzögerung vorgesehen ist.

3. Vorrichtung nach Anspruch 1 oder 2,
**dadurch gekennzeichnet,**
**daß** die Einrichtung zur Ermittlung eines Hydraulikdruckes eine Berechnungseinheit ist, die den Hydraulikdruck aus den Ansteuerzeiten von im Hydraulikaggregat verbauten Ventilen und einer Rückförderpumpe anhand eines Modells abschätzt.

4. Vorrichtung nach Anspruch 1 oder 2,
**dadurch gekennzeichnet,**
**daß** zumindest ein Drucksensor zwischen dem Hydraulikaggregat und den Radbremsen angeordnet ist, mittels dem der Hydraulikdruck ermittelbar ist.

5. Vorrichtung nach einem der vorhergehenden Ansprüche,
**dadurch gekennzeichnet,**
**daß** als erste Fahrzeugbetriebsbedingungen zusätzlich die Feststellung eines aktiven Druckaufbaus am Hydraulikaggregat und/oder das Überschreiten eines ersten Hydraulikgrenzdruckes gewählt werden.

6. Vorrichtung nach einem der vorhergehenden Ansprüche,
**dadurch gekennzeichnet,**
**daß** als zweite Fahrzeugbetriebsbedingungen die Feststellung der Beendigung des aktiven Druckaufbaus am Hydraulikaggregat, das Unterschreiten eines vorgegebenen zweiten Fahrzeug-Verzögerungsgrenzwertes oder das Unterschreitung eines zweiten Hydraulik-Grenzdruckes gewählt werden.

7. Vorrichtung nach Anspruch 6,
**dadurch gekennzeichnet,**
**daß** sich der erste und der zweite Fahrzeug-Verzögerungsgrenzwert um einen Offset-Betrag unterscheiden.

8. Vorrichtung nach einem der vorhergehenden Ansprüche,
**dadurch gekennzeichnet,**
**daß** sich der erste Fahrzeug-Verzögerungsgrenzwert bei einem Hydraulikdruck von 0 bar aus einer geschwindigkeitsabhängigen Eigenverzögerung und einem definierten Offsetwert zusammensetzt.

9. Vorrichtung nach einem der vorhergehenden Ansprüche,
**dadurch gekennzeichnet,**
**daß** der Fahrzeug-Verzögerungsgrenzwert die Null-Verzögerungslinie (Verzögerung 0 m/s²) bei einem Hydraulikdruck p schneidet, der eine Hangabtriebskraft bei einem bestimmten Gefälle kompensiert.

## Claims

1. A device for controlling brake lights in a vehicle comprising a braking system configured for outside force actuation with a control unit (20) for controlling the vehicle brakes and with a brake light switch (15) which is arranged in the region of a brake pedal (1) and which is connected to a control device (16) for controlling at least one brake light (17, 18), the control unit (20) being coupled to the control device (16) and actuating it in such a way that the at least one brake light (17, 18) can be activated during operation of the braking system actuated by means of outside force even without actuation of the brake light switch (15) under first specified vehicle operating conditions and can be deactivated under second specified vehicle operating conditions, **characterised in that**
- a device for determining a vehicle actual deceleration is provided and a value corresponding to the vehicle actual deceleration value is provided to the control unit (20),
- the braking system comprises a hydraulic assembly with a device for determining a hydraulic pressure,
- the exceeding of a specified first vehicle deceleration boundary value is selected as the first vehicle operating condition,
- and the vehicle deceleration boundary value increases, to take into account road gradients, with increasing hydraulic pressure.

2. A device according to claim 1, **characterised in that** at least one wheel speed sensor (22, 23, 24, 25) is provided to determine the vehicle actual deceleration.

3. A device according to claim 1 or 2, **characterised in that** the device for determining a hydraulic pressure is a calculating unit, which estimates the hydraulic pressure from the control times of valves installed in the hydraulic assembly and a recycling pump, with the aid of a model.

4. A device according to claim 1 or 2, **characterised in that** at least one pressure sensor is arranged between the hydraulic assembly and the wheel brakes, by means of which the hydraulic pressure can be determined.

5. A device according to any one of the preceding claims, **characterised in that**, in addition, the establishing of an active pressure build-up at the hydraulic assembly and/or the exceeding of a first hydraulic boundary pressure are selected as the first vehicle operating conditions.

6. A device according to any one of the preceding claims, **characterised in that** the establishing of the termination of the active pressure build-up at the hydraulic assembly, the falling below of a specified second vehicle deceleration boundary value or the falling below of a second hydraulic boundary pressure are selected as the second vehicle operating conditions.

7. A device according to claim 6, **characterised in that** the first and the second vehicle deceleration boundary value differ by an offset amount.

8. A device according to any one of the preceding claims, **characterised in that** the first vehicle deceleration boundary value at a hydraulic pressure of 0 bar is composed of a speed-dependent intrinsic deceleration and a defined offset value.

9. A device according to any one of the preceding claims, **characterised in that** the vehicle deceleration boundary value intersects the zero deceleration line (deceleration 0 m/s²) at a hydraulic pressure p, which compensates for a downhill driving force at a given slope.

## Revendications

1. Dispositif pour commander les feux de freinage dans un véhicule avec un système de freinage réalisé pour un actionnement par force extérieure avec un appareil de commande (20) en vue de la commande des freins du véhicule et avec un commutateur de feux de freinage (15) dans la région d'une pédale de frein (1) relié à un dispositif de commande (16) en vue de la commande d'au moins un feu de freinage (17, 18), l'appareil de commande (20) étant accouplé au dispositif de commande (16) et sollicitant celui-ci de sorte qu'au moins un feu de freinage (17, 18) peut être activé lorsque le système de freinage est actionné par une force extérieure même sans l'actionnement du commutateur de feux de freinage (15), lors de premières conditions de fonctionnement du véhicule prédéfinies, et peut être désactivé lors de deuxièmes conditions de fonctionnement du véhicule prédéfinies,
**caractérisé en ce que**
- un dispositif prévu pour déterminer une décélération réelle du véhicule fournit une valeur correspondant à la valeur de décélération réelle du véhicule à l'appareil de commande (20),
- le système de freinage comprend un module hydraulique ayant un dispositif pour déterminer une pression hydraulique,
- le dépassement d'une première valeur limite de décélération du véhicule, prédéfinie, est choisi comme premières conditions de fonctionnement du véhicule,
- et la valeur limite de décélération du véhicule augmente avec une pression hydraulique croissante, en vue de prendre en compte des inclinaisons de la chaussée.

2. Dispositif selon la revendication 1,
**caractérisé par**
au moins un capteur de vitesse de rotation de roue (22, 23, 24, 25) pour déterminer la décélération réelle du véhicule.

3. Dispositif selon la revendication 1 ou 2,
**caractérisé en ce que**
le dispositif pour déterminer une pression hydraulique est une unité de calcul qui estime à l'aide d'un modèle la pression hydraulique à partir des durées de commande de soupapes dans le module hydraulique et d'une pompe de refoulement.

4. Dispositif selon la revendication 1 ou 2,
**caractérisé en ce qu'**
au moins un capteur de pression détermine la pression hydraulique entre le module hydraulique et les freins de roue.

5. Dispositif selon l'une quelconque des revendications précédentes,
**caractérisé en ce que**
comme premières conditions de fonctionnement du véhicule, on choisit en outre la détermination d'une montée en pression active sur le module hydraulique et/ou le dépassement d'une première pression limite hydraulique.

6. Dispositif selon l'une quelconque des revendications précédentes,
**caractérisé en ce que**
comme deuxièmes conditions de fonctionnement du véhicule, on choisit la détermination de la fin de la montée en pression active sur le module hydraulique, le dépassement d'une deuxième valeur limite de décélération du véhicule prédéfinie ou le passage sous une deuxième pression limite hydraulique.

7. Dispositif selon la revendication 6,
**caractérisé en ce que**
la première et la deuxième valeur limite de décélération du véhicule se différencient d'un certain décalage.

8. Dispositif selon l'une quelconque des revendications précédentes,
**caractérisé en ce que**
la première valeur limite de décélération du véhicule à une pression hydraulique de 0 bar est composée d'une décélération propre dépendant de la vitesse et d'une valeur de décalage définie.

9. Dispositif selon l'une quelconque des revendications précédentes,
**caractérisé en ce que**
la valeur limite de décélération du véhicule coupe la ligne de décélération nulle (décélération de 0 m/s²) à une pression hydraulique p qui compense une force descensionnelle en pente avec une pente déterminée.
